(19) Europäisches Patentamt / European Patent Office / Office européen des brevets

(11) **EP 4 290 328 B1**

(12) **EUROPEAN PATENT SPECIFICATION**

(45) Date of publication and mention
of the grant of the patent:
**17.09.2025 Bulletin 2025/38**

(21) Application number: **21924402.7**

(22) Date of filing: **14.12.2021**

(51) International Patent Classification (IPC):
**G05D 1/644** *(2024.01)*      **G05D 1/43** *(2024.01)*

(52) Cooperative Patent Classification (CPC):
**G05D 1/644; G05D 1/43; Y02T 10/40**

(86) International application number:
**PCT/CN2021/137669**

(87) International publication number:
**WO 2022/166409 (11.08.2022 Gazette 2022/32)**

(54) **PATH OPTIMIZATION METHOD AND APPARATUS, AND ROBOT AND STORAGE MEDIUM**

WEGOPTIMIERUNGSVERFAHREN UND -VORRICHTUNG SOWIE ROBOTER UND
SPEICHERMEDIUM

PROCÉDÉ ET APPAREIL D'OPTIMISATION DE TRAJECTOIRE, ET ROBOT ET SUPPORT DE
STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2021 CN 202110158712**

(43) Date of publication of application:
**13.12.2023 Bulletin 2023/50**

(73) Proprietor: **Jingdong Technology Information
Technology Co., Ltd.
Beijing 100176 (CN)**

(72) Inventors:
• **CHEN, Yongyu**
  **Beijing 100176 (CN)**
• **WANG, Chao**
  **Beijing 100176 (CN)**
• **YAO, Xiujun**
  **Beijing 100176 (CN)**
• **GUI, Chenguang**
  **Beijing 100176 (CN)**
• **CUI, Lihua**
  **Beijing 100176 (CN)**

(74) Representative: **karo IP
Patentanwälte PartG mbB
Steinstraße 16-18
40212 Düsseldorf (DE)**

(56) References cited:
CN-A- 108 958 238      CN-A- 109 737 961
CN-A- 109 947 101      CN-A- 110 221 600
CN-A- 112 197 778      CN-A- 112 987 724
US-A1- 2019 080 266    US-A1- 2019 086 925
US-A1- 2019 187 703    US-A1- 2019 257 664

• ROESMANN CHRISTOPH: "Obstacle Avoidance
and Robot Footprint Model",
TEB_LOCAL_PLANNER/TUTORIALS/
OBSTACLE AVOIDANCE AND ROBOT
FOOTPRINT MODEL - ROS WIKI, 19 April 2016
(2016-04-19), XP093142968, Retrieved from the
Internet <URL:https://wiki.ros.org/
teb_local_planner/Tutorials/Obstacle%
20Avoidance%20and%20Robot%20Footprint%
20Model> [retrieved on 20240319]

## Description

### TECHNICAL FIELD

This application generally relates to the technical field of robotics, and more particularly to a method and an apparatus for path optimization, a robot and a storage medium.

### BACKGROUND

At present, the local path planning of robot can be roughly divided into: constructing an initial path by a sampling-based path planning method, where the initial path can meet the requirements of passing through and obstacle avoidance, but the smoothness generally does not meet the requirements; therefore, a method based on numerical optimization is adopted to optimize the initial path, where in the process of initial path optimization, smoothness optimization should be considered, at the same time, it is necessary to optimize the distance from obstacles so as to ensure a moderate distance between the robot and obstacles.

In related technologies, for some small and symmetrical robots, in the process of initial path optimization of the robot, it is usually necessary to use the nearest obstacle distance corresponding to the centroid coordinates of the robot to participate in obstacle distance optimization.

US 2019/0080266 A1 describes a cost based path planning for autonomous driving vehicles based on a computer-implemented method, a machine-readable medium and a data processing system. Further, Roesmann, Christoph describes an obstacle avoidance and robot footprint model. Further, US 2019/0086925 A1 describes a path optimization based on constrained smoothing spline for autonomous driving vehicles based on a computer-implemented method, a machine-readable medium and a data processing system.

### SUMMARY

A method and an apparatus for path optimization as defined by the independent claims, as well as a robot and a computer-readable storage medium are proposed.

In a first aspect, this application relates to a method for path optimization, the method includes:

> acquiring an initial path of a robot, and iteratively optimizing the initial path based on the following steps until a preset iteration termination condition is met to obtain obstacle avoidance path of the robot:
> acquiring an iteration path corresponding to a current iteration process, determining a smoothness cost corresponding to the iteration path and a smoothness optimal gradient corresponding to an iteration path point in the iteration path;
> determining a robot's footprint contour corresponding to the iteration path point, and searching for a first nearest obstacle distance corresponding to the footprint contour;
> determining an obstacle cost corresponding to the iteration path and an obstacle optimal gradient corresponding to the iteration path point based on the first nearest obstacle distance;
> adjusting the iteration path point based on the smoothness optimal gradient and the obstacle optimal gradient to acquire an iteration path corresponding to a next iteration process; and
> inputting the smoothness cost and the obstacle cost to a preset objective function.

In some embodiments, determining the robot's footprint contour corresponding to the iteration path point includes:

> acquiring a heading angle corresponding to the iteration path point and determining a footprint contour of the robot corresponding to the heading angle;
> selecting footprint contour points of the robot corresponding to the iteration path point from the footprint contour based on a preset rule for selecting contour points.

In some embodiments, searching for the first nearest obstacle distance corresponding to the footprint contour includes:
searching for first nearest obstacle distances corresponding to the footprint contour points in a preset distance map.

Further, determining the obstacle cost corresponding to the iteration path and the obstacle optimal gradient corresponding to the iteration path point based on the first nearest obstacle distance includes:

> selecting, from the footprint contour points, a footprint contour point with a smallest first nearest obstacle as a target footprint contour point corresponding to the iteration path point;

determining an obstacle cost corresponding to the iteration path by using the first nearest obstacle distance corresponding to the target footprint contour point;

determining an away-from-obstacle gradient corresponding to the target footprint contour point; and

determining an obstacle optimal gradient corresponding to the iteration path point by using the first nearest obstacle distance and the away-from-obstacle gradient corresponding to the target footprint contour point.

In some embodiments, determining the obstacle cost corresponding to the iteration path by using the first nearest obstacle distance corresponding to the target footprint contour point includes:

inputting the first nearest obstacle distance corresponding to the target footprint contour point to a preset obstacle cost algorithm; and

acquiring an obstacle cost corresponding to the iteration path point output by the obstacle cost algorithm, and summarizing the obstacle cost corresponding to the iteration path point to obtain the obstacle cost corresponding to the iteration path.

In some embodiments, the obstacle cost algorithm includes:

$$f_o = \begin{cases} (d_{min} - d_\delta)^2, d_{min} < d_\delta \\ 0, d_{min} \geq d_\delta \end{cases};$$

where, the $f_o$ is an obstacle cost corresponding to the iteration path point, the $d_{min}$ is the first nearest obstacle distance corresponding to the target footprint contour point, the $d_\delta$ is a preset distance.

In some embodiments, determining the away-from-obstacle gradient corresponding to the target footprint contour point includes

determining a neighbor point corresponding to the target footprint contour point, and searching for a second nearest obstacle distance corresponding to the neighbor point;

selecting, from the neighbor points, a first neighbor point with a largest second nearest obstacle distance and a second neighbor point with a smallest second nearest obstacle distance;

determining a distance between the first neighbor point and the second neighbor point, and determining the distance as the away-from-obstacle gradient corresponding to the target footprint contour point.

In some embodiments, determining the obstacle optimal gradient corresponding to the iteration path point by using the first nearest obstacle distance and the away-from-obstacle gradient corresponding to the target footprint contour point includes:

inputting the away-from-obstacle gradient and the first nearest obstacle distance corresponding to the target footprint contour point to a preset obstacle optimal gradient algorithm; and

acquiring an obstacle optimal gradient corresponding to the iteration path point output by the obstacle optimal gradient algorithm.

In some embodiments, the obstacle cost algorithm includes:

$$\frac{\partial f_o}{\partial x} = \begin{cases} 2 * (d_{min} - d_\delta) * grad_{min}, d_{min} < d_\delta \\ 0, d_{min} \geq d_\delta \end{cases};$$

where, the $\frac{\partial f_o}{\partial x}$ is the obstacle optimal gradient, the $d_{min}$ is the first nearest obstacle distance corresponding to the target footprint contour point, the $d_\delta$ is a preset distance, the $grad_{min}$ is the away-from-obstacle gradient.

In some embodiments, adjusting the iteration path points based on the smoothness optimal gradient and the obstacle optimal gradient to acquire the iteration path corresponding to the next iteration process includes:

summarizing the smoothness optimal gradient and the obstacle optimal gradient to obtain an integrated gradient; and

adjusting the iteration path point by using the integrated gradient to obtain an iteration path corresponding to a next iteration process.

In some embodiments, iteratively optimizing the initial path until the preset iteration termination condition is met includes:
iteratively optimizing the initial path until an objective function satisfies a convergence condition, until the number of iterations reaches a preset number of iterations or until the iteration duration reaches a preset duration.

In some embodiments, where the objective function includes:

$$\min_x \lambda_1 f_{ns} + \lambda_2 f_{no};$$

where, the $f_{ns}$ is the smoothness cost, the $f_{no}$ is the obstacle cost, the X is coordinates of the iteration path point.

In a second aspect, this application also relates to an apparatus for path optimization, the apparatus including:

a path acquisition module, configured for acquiring an initial path of a robot;
a path optimization module, configured for iteratively optimizing the initial path based on the following steps until a preset iteration termination condition is met to obtain obstacle avoidance path of the robot:
acquiring an iteration path corresponding to a current iteration process, determining a smoothness cost corresponding to the iteration path and a smoothness optimal gradient corresponding to an iteration path point in the iteration path;
determining a robot's footprint contour corresponding to the iteration path point, and searching for a first nearest obstacle distance corresponding to the footprint contour;
determining an obstacle cost corresponding to the iteration path and an obstacle optimal gradient corresponding to the iteration path point based on the first nearest obstacle distance;
adjusting the iteration path point based on the smoothness optimal gradient and the obstacle optimal gradient to acquire an iteration path corresponding to a next iteration process; and
inputting the smoothness cost and the obstacle cost to a preset objective function.

Further, determining the obstacle cost corresponding to the iteration path and the obstacle optimal gradient corresponding to the iteration path point based on the first nearest obstacle distance includes:

selecting, from the footprint contour points, a footprint contour point with a smallest first nearest obstacle as a target footprint contour point corresponding to the iteration path point;
determining an obstacle cost corresponding to the iteration path by using the first nearest obstacle distance corresponding to the target footprint contour point;
determining an away-from-obstacle gradient corresponding to the target footprint contour point; and
determining an obstacle optimal gradient corresponding to the iteration path point by using the first nearest obstacle distance and the away-from-obstacle gradient corresponding to the target footprint contour point.

In a third aspect, this application also relates to a robot, including a processor, a communication interface, a memory and a communication bus, where the processor, the communication interface and the memory communicate with each other through the communication bus;

the memory is configured for storing computer programs; and
the processor is configured to implement the method for path optimization according to the present application.

In a fourth aspect, this application also relates to a storage medium, where instructions are stored on the storage medium, the program, when executed by a processor, implements the method for path optimization according to the present application.

In a fifth aspect, this application relates to a computer program product including instructions that, when run on a computer, cause the computer to perform method for path optimization according to the present application above.

In some embodiments, in the present application, by acquiring an initial path of a robot, and iteratively optimizing the initial path based on the following steps until a preset iteration termination condition is met to obtain obstacle avoidance path of the robot: acquiring an iteration path corresponding to a current iteration process, determining a smoothness cost corresponding to the iteration path and a smoothness optimal gradient corresponding to an iteration path point in the iteration path; determining a robot's footprint contour corresponding to the iteration path point, and searching for a first nearest obstacle distance corresponding to the footprint contour; determining an obstacle cost corresponding to the iteration path and an obstacle optimal gradient corresponding to the iteration path point based on the first nearest obstacle distance; adjusting the iteration path point based on the smoothness optimal gradient and the obstacle optimal gradient to acquire an iteration path corresponding to a next iteration process; and inputting the smoothness cost and the obstacle cost to a preset objective function. Thus, in a process of the initial path optimization of a robot, the nearest obstacle distance corresponding to the robot's footprint contour is used to participate in the obstacle distance optimization, which can get a more reasonable and smooth obstacle avoidance path of the robot.

## BRIEF DESCRIPTION OF THE DRAWINGS

The accompanying drawings which are incorporated in and constitute a part of the specification illustrate embodiments consistent with the application and together with the description serve to explain the principles of the application.

In order to more clearly explain the technical solution of this application, the drawings of this application will be briefly introduced below, and it will be obvious that other drawings can be acquired from these drawings without creative labor for those of ordinary skill in the art.

Fig. 1 is a schematic diagram of the implementation flow of a method for path optimization shown in an embodiment of the present application.

Fig. 2 is a schematic diagram of the implementation flow of another method for path optimization shown in an embodiment of the present application.

Fig. 3 is a schematic diagram of the effect of selecting footprint contour of the robot shown in an embodiment of the present application.

Fig. 4 is an effect schematic diagram of a first nearest obstacle distance corresponding to the footprint contour of the robot shown in an embodiment of the present application.

Fig. 5 is an effect schematic diagram of target footprint contour points corresponding to iteration path points shown in an embodiment of the present application.

Fig. 6 is an effect schematic diagram of 8 neighbor points corresponding to a target footprint contour point shown in an embodiment of the present application.

Fig. 7 is a schematic diagram of the effect of selecting a first neighbor point and a second neighbor point shown in an embodiment of the present application.

Fig. 8 is a schematic structural diagram of an apparatus for path optimization shown in an embodiment of the present application.

Fig. 9 is a structural schematic diagram of a robot shown in an embodiment of the present application.

## DETAILED DESCRIPTION OF THE EMBODIMENTS

In order to make the purposes, technical aspects and advantages of the disclosed embodiments clearer, the technical aspects of the disclosed embodiments will be clearly and completely described below in conjunction with the accompanying drawings in the disclosed embodiments, and it will be apparent that the described embodiments are part of, but not all of, the embodiments of the disclosed embodiments. Based on the embodiments in the present application all other embodiments acquired without creative effort by those of ordinary skill in the art fall within the scope of protection of the present application.

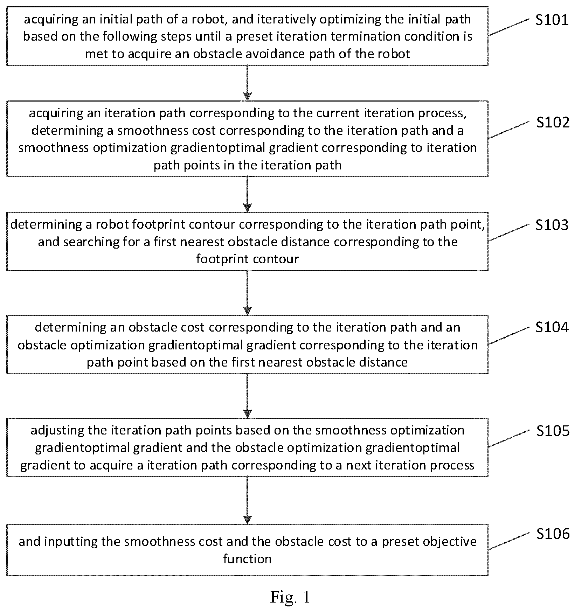

Fig. 1 is a schematic diagram of the implementation flow of a method for path optimization provided by the present application. The method can be applied to a robot, which may include the following steps:

S101, acquiring an initial path of a robot, and iteratively optimizing the initial path based on the following steps until a preset iteration termination condition is met to acquire an obstacle avoidance path of the robot;

S102, acquiring an iteration path corresponding to the current iteration process, determining a smoothness cost corresponding to the iteration path and a smoothness optimal gradient corresponding to iteration path points in the iteration path;

S103, determining a robot footprint contour corresponding to the iteration path point, and searching for a first nearest obstacle distance corresponding to the footprint contour;

S104, determining an obstacle cost corresponding to the iteration path and an obstacle optimal gradient corresponding to the iteration path point based on the first nearest obstacle distance;

S105, adjusting the iteration path points based on the smoothness optimal gradient and the obstacle optimal gradient to acquire an iteration path corresponding to a next iteration process; and

S106, and inputting the smoothness cost and the obstacle cost to a preset objective function.

In some embodiments, an initial path of a robot may be constructed by a sampling-based path planning method, for an initial path of a robot, it typically includes n path points $(\{x_1, y_1\},...,\{x_n, y_n\})$.

In some embodiments, for an initial path of a robot, the initial path may be iteratively optimized based on steps S102 to S106 until a preset iteration termination condition is satisfied to acquire an obstacle avoidance path of the robot.

In some embodiments, the initial path may be iteratively optimized based on steps S102 to S106 until the objective function satisfies a convergence condition.

In some embodiments, the initial path may be iteratively optimized based on the following steps S102 to S106 until the number of iterations reaches a preset number of iterations.

In some embodiments, the initial path may be iteratively optimized based on steps S102 to S106 until the iteration duration reaches a preset duration.

In some embodiments, an iteration path corresponding to the current iteration process is acquired, and a smoothness cost corresponding to the iteration path and a smoothness optimization, where methods for determination the smoothness cost, the smoothness optimal gradient and the like can be inquired in related literature, and will not be described in the embodiments of the present application.

It should be noted that for an iteration path corresponding to the current iterative process, if the current iterative process is a first iterative process, the iteration path is an initial path; if the current iterative process is not the first iterative process, in the last iterative process, an iteration path corresponding to the last iterative process is adjusted to acquire the iteration path corresponding to the current iterative process.

In some embodiments, for an acquired iteration path corresponding to a current iterative process, determine a robot footprint contour corresponding to an iteration path point in the iteration path is determined, and search for a first nearest obstacle distance (i.e., a distance from the nearest obstacle) corresponding to the footprint contour, so that an obstacle cost corresponding to the iteration path and an obstacle optimal gradient corresponding to the iteration path point in the iteration path can be determined based on the first nearest obstacle distance.

In some embodiments, for an iteration path corresponding to the current iteration process, determining the robot's footprint contours respectively corresponding to iteration path points $(x_i, y_i)$ in the iteration path, as shown in Table 1 below, and searching for first nearest obstacle distances corresponding to the footprint contours, so that based on these first nearest obstacle distances, the obstacle cost corresponding to the iteration path and the obstacle optimal gradient corresponding to the iteration path points in the iteration path can be determined.

Table 1

| iteration path point | robot footprint contour |
|---|---|
| $(x_1, y_1)$ | robot footprint contour 1 |
| ... | ... |
| $(x_n, y_n)$ | robot footprint contour n |

In some embodiments, for the smoothness optimal gradient corresponding to the iteration path points in the iteration path and the obstacle optimal gradient corresponding to the iteration path points in the iteration path, the iteration path points in the iteration path are adjusted based on the smoothness optimal gradient and the obstacle optimal gradient (in some embodiments, the coordinates of the iteration path points are adjusted) to acquire the corresponding iteration path in the next iteration process.

In some embodiments, for an iteration path point in an iteration path $(x_i, y_i)$ the corresponding smoothness optimal gradient, and the iteration path points in the iteration path $(x_i, y_i)$ the corresponding obstacle optimal gradient, and based on the smoothness optimal gradient and the obstacle optimal gradient, the iteration path points in the iteration path $(x_i, y_i)$, so as to acquire the corresponding iteration path in the next iteration process.

In some embodiments, for the smoothness cost corresponding to the iteration path and the obstacle cost corresponding to the iteration path, the smoothness cost and the obstacle cost may be output into a preset objective function, which is shown below.

$$\min_{x} \lambda_1 f_{ns} + \lambda_2 f_{no};$$

Where the $f_{ns}$ is a smoothness cost, the $f_{no}$ is an obstacle cost, the X is coordinates of the iteration path points, $\lambda_1$ is a weight of smoothness cost, $\lambda_2$ is a weight of the obstacle cost.

Through the description of the technical solution provided by an embodiment of the present application, acquiring an initial path of a robot, and iteratively optimizing the initial path based on the following steps until a preset iteration termination condition is met to obtain obstacle avoidance path of the robot: acquiring an iteration path corresponding to a current iteration process, determining a smoothness cost corresponding to the iteration path and a smoothness optimal gradient corresponding to an iteration path point in the iteration path; determining a robot's footprint contour corresponding to the iteration path point, and searching for a first nearest obstacle distance corresponding to the footprint contour;

determining an obstacle cost corresponding to the iteration path and an obstacle optimal gradient corresponding to the iteration path point based on the first nearest obstacle distance; adjusting the iteration path point based on the smoothness optimal gradient and the obstacle optimal gradient to acquire an iteration path corresponding to a next iteration process; and inputting the smoothness cost and the obstacle cost to a preset objective function. Thus, in a process of the initial path optimization of a robot, the nearest obstacle distance corresponding to the robot's footprint contour is used to participate in the obstacle distance optimization, which can get a more reasonable and smooth obstacle avoidance path of the robot.

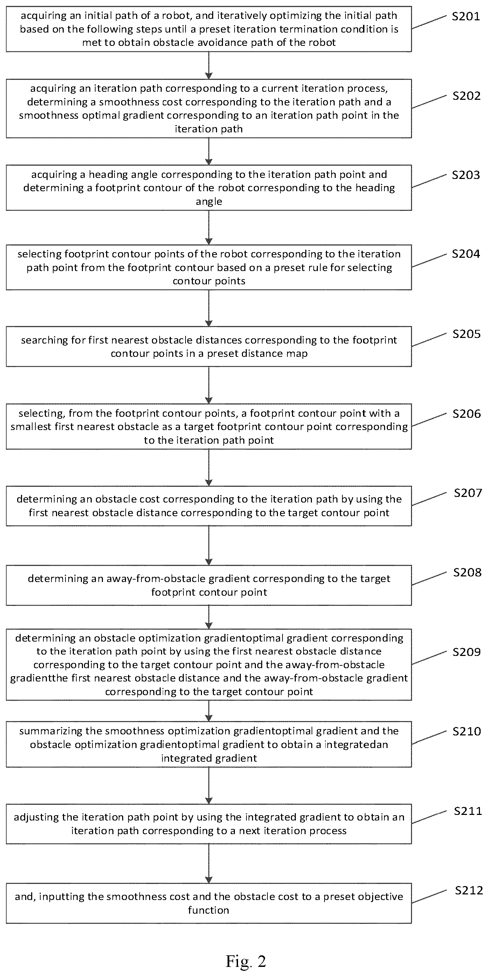

Fig. 2 is a schematic diagram of the implementation flow of another method for path optimization. The method can be applied to a robot, which may include the following steps:

S201, acquiring an initial path of a robot, and iteratively optimizing the initial path based on the following steps until a preset iteration termination condition is met to obtain obstacle avoidance path of the robot; and

S202, acquiring an iteration path corresponding to a current iteration process, determining a smoothness cost corresponding to the iteration path and a smoothness optimal gradient corresponding to an iteration path point in the iteration path;

S203, acquiring a heading angle corresponding to the iteration path point and determining a footprint contour of the robot corresponding to the heading angle;

S204, selecting footprint contour points of the robot corresponding to the iteration path point from the footprint contour based on a preset rule for selecting contour points;

S205, searching for first nearest obstacle distances corresponding to the footprint contour points in a preset distance map;

S206, selecting, from the footprint contour points, a footprint contour point with a smallest first nearest obstacle as a target footprint contour point corresponding to the iteration path point;

S207, determining an obstacle cost corresponding to the iteration path by using the first nearest obstacle distance corresponding to the target footprint contour point;

S208, determining an away-from-obstacle gradient corresponding to the target footprint contour point;

S209, determining an obstacle optimal gradient corresponding to the iteration path point by using the first nearest obstacle distance and the away-from-obstacle gradient corresponding to the target footprint contour point;

S210, summarizing the smoothness optimal gradient and the obstacle optimal gradient to obtain an integrated gradient;

S211, adjusting the iteration path point by using the integrated gradient to obtain an iteration path corresponding to a next iteration process; and

S212, inputting the smoothness cost and the obstacle cost to a preset objective function.

In some embodiments, an initial path of a robot typically includes n path points($\{x_1, y_1\}, \ldots, \{x_n, y_n\}$), where N is a positive integer, and the initial path can be iteratively optimized based on steps S202 to S212 until a preset iteration termination condition is met to obtain a robot obstacle avoidance path.

In some embodiments, this step is similar to step S102 and embodiments of the present application will not be repeated here.

In some embodiments, the obstacle closest to the robot's footprint contour needs to be considered. Therefore, for the iteration path corresponding to the current iterative process, acquire a heading angle corresponding to the iteration path point in the iteration path, and determine the robot's footprint contour under this the heading angle, so that the robot's footprint contour corresponding to the iteration path point in the iteration path can be determined.

In some embodiments, for a corresponding iteration path in the current iteration process, acquire iteration path points in the iteration path are acquired($\{x_1, y_1\}, \ldots, \{x_n, y_n\}$)The robot footprint contour of the heading angle is determined according to the corresponding heading angle, where, the i-th heading angle is acquired in the following way, so that robot the footprint contours respectively corresponding to the iteration path points in the iteration path can be determined.

$$\theta_i = atan2(y_{i+1} - y_i, x_{i+1} - x_i), 1 \le i \le n-1\,;$$

$$\theta_n = \theta_{n-1}.$$

In some embodiments, for a robot footprint contour corresponding to an iteration path point in an iteration path, select footprint contour points of the robot corresponding to the iteration path point from the footprint contour based on a preset rule for selecting contour points. Where the rule for selecting contour points may be an arbitrary selection rule, for example, for a circular robot, the selection rule may be randomly selected, which is not limited by the embodiment of the present application.

In some embodiments, for a robot's footprint contour i corresponding to an iteration path point $(x_i, y_i)$ in an iteration

# EP 4 290 328 B1

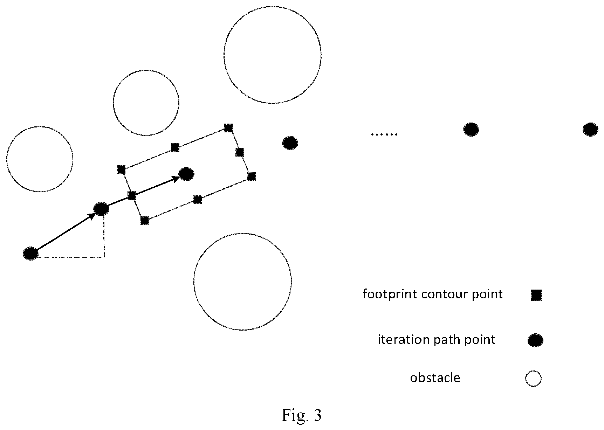

path, taking a footprint contour 3 of the robot corresponding to an iteration path point $(x_3,y_3)$ as an example, which is described by using a rectangle, that is, a rectangular footprint contour of the robot, and four endpoints and the midpoint of each edge in the robot's footprint contour are selected as the robot's footprint contour corresponding to the points iteration path point $(x_3,y_3)$, as shown in Fig. 3. The processing of other iteration path points is similar, and this embodiment will not be repeated here.

In some embodiments, for a robot's footprint contour points corresponding to an iteration path point in an iteration path, a first nearest obstacle distance corresponding to the robot's footprint contour point, i.e., a distance between the footprint contour point of the robot and the nearest obstacle, can be searched for in a preset distance map. Where, the first nearest obstacle distance corresponding to the footprint contour point of the robot is searched for in the preset distance map based on the coordinates of the footprint contour point of the robot.

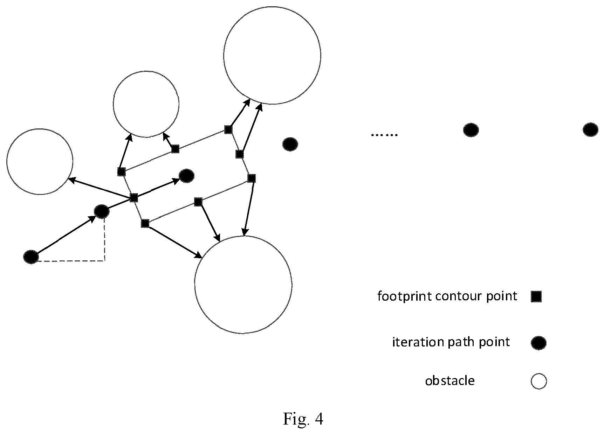

In some embodiments, for a robot's footprint contour point i corresponding to an iteration path point $(x_i,y_i)$ in an iteration path, taking the robot's iteration path points corresponding to the iteration path point $(x_3,y_3)$ as an example, as shown in Fig. 3, based on the coordinates of these footprint contour points of the robot, the first nearest obstacle distances respectively corresponding to these footprint contour points of the robot and the like can be found in the distance graph, as shown in Fig. 4. Processing of other iteration path points is similar, and the embodiments of the present application are not repeated here.

In some embodiments, for a robot's footprint contour points corresponding to an iteration path point in an iteration path, a footprint contour point with a smallest first nearest obstacle can be selected, from the footprint contour points, as a target footprint contour point corresponding to the iteration path point, which means that the first closest obstacle distance of the target footprint contour point is the smallest.

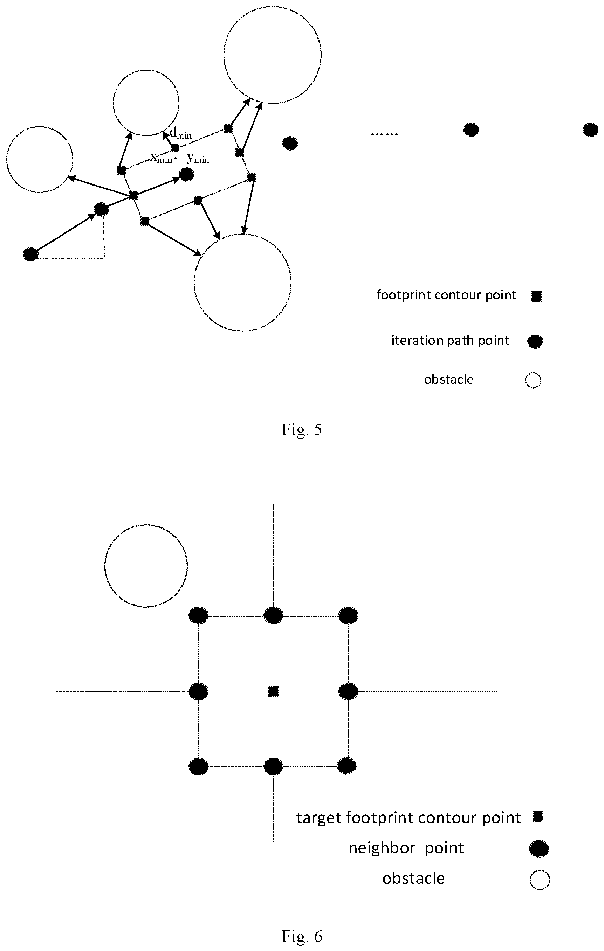

In some embodiments, for a robot's footprint contour points corresponding to an iteration path point $(x_i,y_i)$ in an iteration path, taking the robot's iteration path points corresponding to the iteration path point $(x_3,y_3)$ as an example, as shown in Fig. 3, a footprint contour point with a smallest first nearest obstacle $(d_{min})$ can be selected, from the footprint contour points, as a target footprint contour point $(x_{min}, y_{min})$ corresponding to the iteration path point $(x_3,y_3)$, as shown in Fig. 5. Processing of other iteration path point is similar, and the embodiments of the present application are not repeated here.

For the target footprint contour point corresponding to the iteration path point in the iteration path, an obstacle cost corresponding to the iteration path can be determined by using the first nearest obstacle distance corresponding to the target footprint contour point.

For the target footprint contour points respectively corresponding to the iteration path points $(x_i, y_i)$ in the iteration path, as shown in Table 2 below, an obstacle cost corresponding to the iteration path can be determined by using the first nearest obstacle distance corresponding to the target footprint contour point.

Table 2

| iteration path point | target footprint contour point |
|---|---|
| $(x_1,y_1)$ | target footprint contour point 1 |
| ... | ... |
| $(x_n,y_n)$ | target footprint contour point n |

In some embodiments, the embodiment of the present application can determine the obstacle cost corresponding to the iteration path in the following method: for the target footprint contour point corresponding to the iteration path point in the iteration path, input the first nearest obstacle distance corresponding to the target footprint contour point to a preset obstacle cost algorithm, acquire an obstacle cost corresponding to the iteration path point output by the obstacle cost algorithm, and summarize the obstacle cost corresponding to the iteration path point to obtain the obstacle cost corresponding to the iteration path.

In some embodiments, for a target footprint contour point corresponding to the iteration path point $(x_i,y_i)$ in an iteration path, input the first nearest obstacle distance corresponding to the target footprint contour point to a preset obstacle cost algorithm, such that an obstacle cost corresponding to the iteration path point $(x_i,y_i)$ output by the obstacle cost algorithm can be acquired, and summarize the obstacle costs corresponding to the iteration path points $(\{x_1,y_1\}, ... , \{x_n, y_n\})$ to obtain the obstacle cost corresponding to the iteration path.

For the obstacle cost algorithm, as shown below, it can be seen that when the minimum distance between the obstacle and the robot's footprint contour is smaller than a preset distance, the obstacle cost is then calculated and obstacle optimization is started. The obstacle cost algorithm is as follows:

8

$$f_o = \begin{cases} (d_{min} - d_\delta)^2, d_{min} < d_\delta \\ 0, d_{min} \geq d_\delta \end{cases};$$

Where, the $f_o$ is an obstacle cost corresponding to the iteration path point, the $d_{min}$ is the first nearest obstacle distance corresponding to the target footprint contour point, the $d_\delta$ is a preset distance.

For the target footprint contour points corresponding to the iteration path points in the iteration path, an away-from-obstacle gradient corresponding to the target footprint contour points can be determined.

In some embodiments, for the target footprint contour points corresponding to the iteration path points $(x_i, y_i)$ in an iteration path, the away-from-obstacle gradients respectively corresponding to these target footprint footprint contour points can be determined, as shown in Table 3.

Table 3

| iteration path point | target footprint contour point | away-from-obstacle gradient |
|---|---|---|
| $(x_1, y_1)$ | target footprint contour point 1 | away-from-obstacle gradient 1 |
| ...... | ...... | ...... |
| $(x_n, y_n)$ | target footprint contour point n | away-from-obstacle gradient n |

In some embodiments, the away-from-obstacle gradient corresponding to the target footprint contour point, in an embodiment of the present application, is determined in the following method: for the target footprint contour point corresponding to the iteration path point in the iteration path, determine a neighbor point corresponding to the target footprint contour point, and search, in a distance map, for a second nearest obstacle distance corresponding to the neighbor point; select, from the neighbor points, a first neighbor point with the largest second nearest obstacle distance and a second neighbor point with the smallest second nearest obstacle distance; determine a distance between the first neighbor point and the second neighbor point, and determine the distance as the away-from-obstacle gradient corresponding to the target footprint contour point.

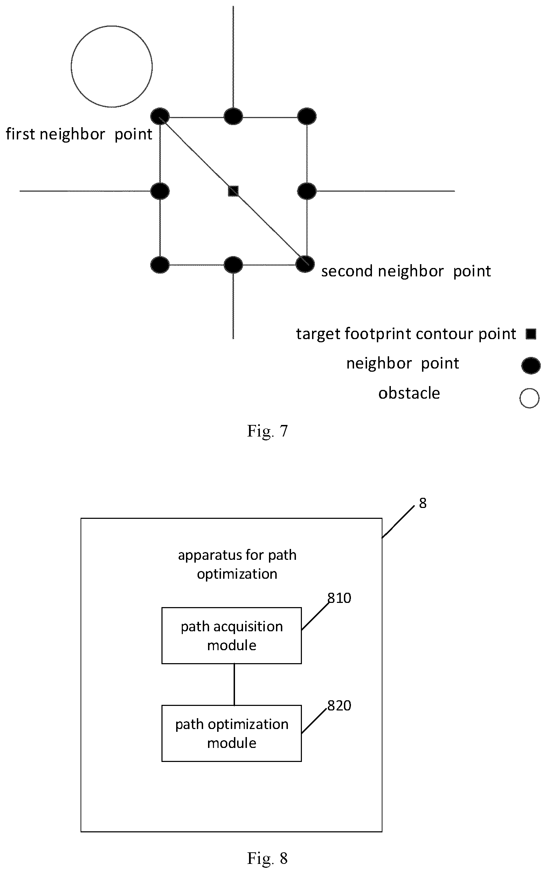

In some embodiments, for the target footprint contour point corresponding to the iteration path points $(x_i, y_i)$ in the iteration path, taking the footprint contour point corresponding to the iteration path point $(x_3, y_3)$ as an example, determine 8 neighbor points corresponding to the target footprint contour point, as shown in Fig. 6. According to the coordinates of the 8 neighbor points, search, in the distance map, for the second nearest obstacle distances corresponding to the 8 neighbor points. Select, from the 8 neighbor points, a first neighbor point with the largest second nearest obstacle distance and a second neighbor point with the smallest second nearest obstacle distance, as shown in Fig. 7. Determine a distance between the first neighbor point and the second neighbor point, and determine the distance as the away-from-obstacle gradient corresponding to the target footprint contour point. Processing of other iteration path point is similar, and the embodiments of the present application are not repeated here.

For the target footprint contour point corresponding to the iteration path points in the iteration path, the obstacle optimal gradient corresponding to the iteration path point can be determined by using the first nearest obstacle distance and the away-from-obstacle gradient corresponding to the target footprint contour point.

In some embodiments, for the target footprint contour point corresponding to the iteration path points $(x_i, y_i)$ in the iteration path, taking the footprint contour point corresponding to the iteration path point $(x_3, y_3)$ as an example, determine the obstacle optimal gradient corresponding to the iteration path point $(x_3, y_3)$ by using the first nearest obstacle distance and the away-from-obstacle gradient corresponding to the target footprint contour point. Processing of other iteration path point is similar, and the embodiments of the present application are not repeated here.

In some embodiments, the obstacle optimal gradient corresponding to the iteration path point, in an embodiment of the present application, is determined in the following method: for the target footprint contour point corresponding to the iteration path points in the iteration path, input the first nearest obstacle distance and the away-from-obstacle gradient corresponding to the target footprint contour point to a preset obstacle optimal gradient algorithm, and acquire an obstacle optimal gradient corresponding to the iteration path point output by the obstacle optimal gradient algorithm.

In some embodiments, for the target footprint contour point corresponding to the iteration path points $(x_i, y_i)$ in the iteration path, taking the footprint contour point corresponding to the iteration path point $(x_3, y_3)$ as an example, input the first nearest obstacle distance and the away-from-obstacle gradient corresponding to the target footprint contour point to a preset obstacle optimal gradient algorithm, and acquire an obstacle optimal gradient corresponding to the iteration path point $(x_3, y_3)$ output by the obstacle optimal gradient algorithm. Processing of other iteration path point is similar, and the embodiments of the present application are not repeated here.

In some embodiments, for the obstacle optimal gradient algorithm, as shown below, it can be seen that when the minimum distance between the obstacle and the robot's footprint contour is smaller than a preset distance, the obstacle cost is then calculated and the obstacle optimization is started. The obstacle optimal gradient algorithm is as follows:

$$\frac{\partial f_o}{\partial x} = \begin{cases} 2 * (d_{min} - d_\delta) * grad_{min}, d_{min} < d_\delta \\ 0, d_{min} \geq d_\delta \end{cases};$$

Where, the $\frac{\partial f_o}{\partial x}$ is the obstacle optimal gradient, the $d_{min}$ is the first nearest obstacle distance corresponding to the target footprint contour point, the $d_\delta$ is a preset distance, the $grad_{min}$ is the away-from-obstacle gradient.

In some embodiments, for the smoothness optimal gradient corresponding to the iteration path point in the iteration path and the obstacle optimal gradient corresponding to the iteration path point in the iteration path, an integrated gradient corresponding to the iteration path point in the iteration path can be obtained by summarizing the smoothness optimal gradient and the obstacle optimal gradient.

In some embodiments, for the smoothness optimal gradient corresponding to the iteration path points $(x_i, y_i)$ in the iteration path and the obstacle optimal gradient corresponding to the iteration path points $(x_i, y_i)$ in the iteration path, an integrated gradient corresponding to the iteration path points $(x_i, y_i)$ in the iteration path can be obtained by summarizing the smoothness optimal gradient and the obstacle optimal gradient.

In some embodiments, for the integrated gradient corresponding to the iteration path point in the iteration path, the iteration path points in the iteration path can be adjusted by using the integrated gradient, and in some embodiments, the coordinate values may be adjusted so that the iteration path corresponding to the next iteration process can be obtained.

In some embodiments, for the integrated gradient corresponding to the iteration path point in the iteration path, taking the iteration path point $(x_3, y_3)$ as an example, the iteration path point $(x_3, y_3)$ in the iteration path can be adjusted by using the integrated gradient, processing of other iteration path points are similar, so the embodiment will not be repeated here one by one, so that the iteration path corresponding to the next iteration process can be acquired.

In some embodiments, this step is similar to step S106 described above and embodiments of the present application are not repeated here.

The present application also relates to an apparatus for path optimization 8, as shown in Fig. 8, the apparatus may include a path acquisition module 810 and a path optimization module 820.

The path acquisition module 810, is configured for acquiring an initial path of a robot;

The path optimization module 820, is configured for iteratively optimizing the initial path based on the following steps until a preset iteration termination condition is met to acquire an obstacle avoidance path of the robot:

acquiring an iteration path corresponding to the current iteration process, determining a smoothness cost corresponding to the iteration path and a smoothness optimal gradient corresponding to iteration path points in the iteration path;

determining a robot footprint contour corresponding to the iteration path point, and searching for a first nearest obstacle distance corresponding to the footprint contour;

determining an obstacle cost corresponding to the iteration path and an obstacle optimal gradient corresponding to the iteration path point based on the first nearest obstacle distance;

adjusting the iteration path points based on the smoothness optimal gradient and the obstacle optimal gradient to acquire an iteration path corresponding to a next iteration process; and

inputting the smoothness cost and the obstacle cost to a preset objective function.

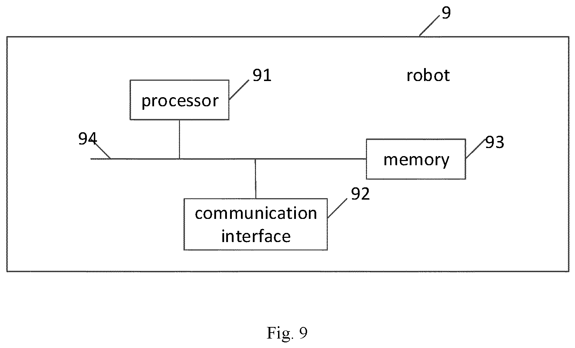

The present application also relates to a robot 9, which, as shown in Fig. 9, includes a processor 91, a communication interface 92, a memory 93 and a communication bus 94, where the processor 91, the communication interface 92 and the memory 93 communicate with each other through the communication bus 94,

the memory 93 is configured for storing computer programs; and
the processor 91is configured to implement the following steps:
acquiring an initial path of a robot, and iteratively optimizing the initial path based on the following steps until a preset iteration termination condition is met to acquire an obstacle avoidance path of the robot; acquiring an iteration path corresponding to the current iteration process, determining a smoothness cost corresponding to the iteration path and a smoothness optimal gradient corresponding to iteration path points in the iteration path; determining a robot footprint contour corresponding to the iteration path point, and searching for a first nearest obstacle distance corresponding to the footprint contour; determining an obstacle cost corresponding to the iteration path and an obstacle optimal gradient corresponding to the iteration path point based on the first nearest obstacle distance; adjusting the iteration path points based on the smoothness optimal gradient and the obstacle optimal gradient to acquire an iteration path corresponding to a next iteration process; and inputting the smoothness cost and the obstacle cost to a preset objective function.

The communication bus mentioned by the robot can be Peripheral Component Interconnect (PCI) bus or Extended Industry Standard Architecture (EISA) bus, etc. The communication bus can be divided into address bus, data bus, control bus and so on. For ease of presentation, only one thick line is used in the figure, but it does not mean that there is only one bus or one type of bus.

The communication interface is used for communication between the robot and other devices.

The memory may include Random Access Memory (RAM), non-volatile memory, at least one disk memory. In some embodiments, the memory may also be at least one storage device located remotely from the processor.

The processor can be a general-purpose processor, including a Central Processing Unit (CPU), a Network Processor (NP), and the like; It can also be Digital Signal Processing (DSP), Application Specific Integrated Circuit (ASIC), Field-Programmable Gate Array (FPGA) or other programmable logic devices, discrete gates or transistor logic devices, and discrete hardware components.

The present application also provides a storage medium where instructions are stored on the storage medium, where, the program, when executed by a processor, implements the method for path optimization according to any one of the above embodiments.

The present application also provides a computer program product including instructions that, when run on a computer, cause the computer to perform method for path optimization described in any of the above embodiments.

In some embodiments it may be implemented in whole or in part by software hardware firmware or any combination thereof. When implemented in software, it can be implemented in whole or in part in the form of a computer program product. The computer program product includes one or more computer instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a storage medium or transmitted from one storage medium to another. For example, the computer instructions may be transmitted from one Web site, computer, server, or data center to another Web site, computer, server, or data center via wired (e.g. coaxial cable, optical fiber, digital subscriber line (DSL)) or wireless (e.g. infrared, wireless, microwave, etc.). The storage medium may be any available medium accessible to a computer or a data storage device such as a server, data center, or the like that includes one or more available media integration. The usable media may be magnetic media (e.g. floppy disk, hard disk, magnetic tape), optical media (e.g. DVD), or semiconductor media (e.g. Solid State Disk (SSD)), etc.

It should be noted that relational terms such as first and second are used herein only to distinguish one entity or operation from another and do not necessarily require or imply any such actual relationship or order between these entities or operations. Moreover, the terms "including", "including" or any other variation thereof are intended to encompass non-exclusive inclusion, so that a process, method, article or equipment that includes a set of elements includes not only those elements but also other elements that are not explicitly listed or are inherent to such a process, method, article or equipment. In the absence of further limitations, an element defined by the phrase "includes an •••" does not preclude the existence of another identical element in the process, method, article or equipment in which the element is included.

Each of the embodiments in this specification is described in a related manner and the same and similar parts between the embodiments can be referred to each other. Each embodiment focuses on the differences from other embodiments. Particularly for the system embodiment since it is substantially similar to the method embodiment the description is relatively simple and reference can be made to the partial description of the method embodiment where relevant.

**Claims**

1. A method for path optimization, comprising:
   acquiring (S101) an initial path of a robot, and iteratively optimizing the initial path based on the following steps until a preset iteration termination condition is met to obtain obstacle avoidance path of the robot:

   acquiring (S102) an iteration path corresponding to a current iteration process, determining a smoothness cost corresponding to the iteration path and a smoothness optimal gradient corresponding to an iteration path point in the iteration path;
   determining (S103) a robot's footprint contour corresponding to the iteration path point, and searching for a first nearest obstacle distance corresponding to the footprint contour;
   determining (S104) an obstacle cost corresponding to the iteration path and an obstacle optimal gradient corresponding to the iteration path point based on the first nearest obstacle distance;

adjusting (S105) the iteration path point based on the smoothness optimal gradient and the obstacle optimal gradient to acquire an iteration path corresponding to a next iteration process; and

inputting (S106) the smoothness cost and the obstacle cost to a preset objective function, **characterized in that** the step of determining (S104) the obstacle cost corresponding to the iteration path and the obstacle optimal gradient corresponding to the iteration path point based on the first nearest obstacle distance comprises the following steps:

selecting (S206), from footprint contour points of the robot's footprint contour, a footprint contour point with a smallest first nearest obstacle as a target footprint contour point corresponding to the iteration path point;

determining (S207) the obstacle cost corresponding to the iteration path by using the first nearest obstacle distance corresponding to the target footprint contour point;

determining (S208) an away-from-obstacle gradient corresponding to the target footprint contour point; and

determining (S209) the obstacle optimal gradient corresponding to the iteration path point by using the first nearest obstacle distance and the away-from-obstacle gradient corresponding to the target footprint contour point.

2. The method according to claim 1, wherein, the step of determining the robot's footprint contour corresponding to the iteration path point comprises:

acquiring (S203) a heading angle corresponding to neighboring iteration path points of the iteration path point and determining a footprint contour of the robot corresponding to the heading angle;

selecting (S204) footprint contour points of the robot corresponding to the iteration path point from the footprint contour based on a preset rule for selecting contour points.

3. The method according to claim 2, wherein searching for the first nearest obstacle distance corresponding to the footprint contour comprises:

searching (S205) for first nearest obstacle distances corresponding to the footprint contour points in a preset distance map.

4. The method according to claim 1, wherein, determining the obstacle cost corresponding to the iteration path by using the first nearest obstacle distance corresponding to the target footprint contour point comprises:

inputting the first nearest obstacle distance corresponding to the target footprint contour point to a preset obstacle cost algorithm; and

acquiring an obstacle cost corresponding to the iteration path point output by the obstacle cost algorithm, and summarizing the obstacle cost corresponding to the iteration path point to obtain the obstacle cost corresponding to the iteration path.

5. The method according to claim 4, wherein the obstacle cost algorithm comprises:

$$f_o = \begin{cases} (d_{min} - d_\delta)^2, d_{min} < d_\delta \\ 0, d_{min} \geq d_\delta \end{cases};$$

wherein, the $f_o$ is an obstacle cost corresponding to the iteration path point, the $d_{min}$ is the first nearest obstacle distance corresponding to the target footprint contour point, the $d_\delta$ is a preset distance.

6. The method according to any one of claims 1 to 5, wherein determining the away-from-obstacle gradient corresponding to the target footprint contour point comprises

determining a neighbor point corresponding to the target footprint contour point, and searching for a second nearest obstacle distance corresponding to the neighbor point;

selecting, from the neighbor points, a first neighbor point with a largest second nearest obstacle distance and a second neighbor point with a smallest second nearest obstacle distance;

determining a distance between the first neighbor point and the second neighbor point, and determining the distance as the away-from-obstacle gradient corresponding to the target footprint contour point.

7. The method according to any one of claims 1 to 6, wherein determining the obstacle optimal gradient corresponding to the iteration path point by using the first nearest obstacle distance and the away-from-obstacle gradient corresponding to the target footprint contour point comprises:

inputting the away-from-obstacle gradient and the first nearest obstacle distance corresponding to the target footprint contour point to a preset obstacle optimal gradient algorithm; and
acquiring an obstacle optimal gradient corresponding to the iteration path point output by the obstacle optimal gradient algorithm.

8. The method according to claim 7, wherein the obstacle cost algorithm comprises:

$$\frac{\partial f_o}{\partial x} = \begin{cases} 2 * (d_{min} - d_\delta) * grad_{min} , d_{min} < d_\delta \\ 0, d_{min} \geq d_\delta \end{cases};$$

wherein, the $\dfrac{\partial f_o}{\partial x}$ is the obstacle optimal gradient, the $d_{min}$ is the first nearest obstacle distance corresponding to the target footprint contour point, the $d_\delta$ is a preset distance, the $grad_{min}$ is the away-from-obstacle gradient.

9. The method according to any one of claims 1 to 8, wherein, adjusting the iteration path points based on the smoothness optimal gradient and the obstacle optimal gradient to acquire the iteration path corresponding to the next iteration process comprises:

summarizing (S210) the smoothness optimal gradient and the obstacle optimal gradient to obtain an integrated gradient; and
adjusting (S211) the iteration path point by using the integrated gradient to obtain an iteration path corresponding to a next iteration process.

10. The method according to any one of claims 1 to 9, wherein iteratively optimizing the initial path until the preset iteration termination condition is met comprises:
iteratively optimizing the initial path until an objective function satisfies a convergence condition, until the number of iterations reaches a preset number of iterations or until the iteration duration reaches a preset duration.

11. The method according to any one of claims 1 to 10, wherein the objective function comprises:

$$\min_{x} \lambda_1 f_{ns} + \lambda_2 f_{no} ;$$

wherein, the $f_{ns}$ is the smoothness cost, the $f_{no}$ is the obstacle cost, the X is coordinates of the iteration path point.

12. An apparatus (8) for path optimization, comprising:

a path acquisition module (810), configured for acquiring an initial path of a robot;
a path optimization module (820), configured for iteratively optimizing the initial path based on the following steps until a preset iteration termination condition is met to obtain obstacle avoidance path of the robot:

acquiring an iteration path corresponding to a current iteration process, determining a smoothness cost corresponding to the iteration path and a smoothness optimal gradient corresponding to an iteration path point in the iteration path;
determining a robot's footprint contour corresponding to the iteration path point, and searching for a first nearest obstacle distance corresponding to the footprint contour;
determining an obstacle cost corresponding to the iteration path and an obstacle optimal gradient corresponding to the iteration path point based on the first nearest obstacle distance, said determining the obstacle cost comprises the following aspects a) - d):

a) selecting (S206), from footprint contour points of the robot's footprint contour, a footprint contour point with a smallest first nearest obstacle as a target footprint contour point corresponding to the iteration path point;

b) determining (S207) an obstacle cost corresponding to the iteration path by using the first nearest obstacle distance corresponding to the target footprint contour point;

c) determining (S208) an away-from-obstacle gradient corresponding to the target footprint contour point; and

d) determining (S209) an obstacle optimal gradient corresponding to the iteration path point by using the first nearest obstacle distance and the away-from-obstacle gradient corresponding to the target footprint contour point;

adjusting the iteration path point based on the smoothness optimal gradient and the obstacle optimal gradient to acquire an iteration path corresponding to a next iteration process; and

inputting the smoothness cost and the obstacle cost to a preset objective function.

13. A robot (9), comprising a processor (91), a communication interface (92), a memory (93) and a communication bus (94), wherein the processor (91), the communication interface (92) and the memory (93) communicate with each other through the communication bus (94);

the memory (93) is configured for storing computer programs; and

the processor (91) is configured to implement the method according to any one of claims 1 to 11.

14. A computer-readable storage medium on which a program is stored, wherein, the program, when executed by a processor, implements the method according to any one of claims 1 to 11.

## Patentansprüche

1. Wegoptimierungsverfahren, umfassend:

Erfassen (S101) eines Anfangswegs eines Roboters und iteratives Optimieren des Anfangswegs auf der Grundlage der folgenden Schritte, bis eine voreingestellte Iterationsbeendigungsbedingung erfüllt ist, um einen Hindernisvermeidungsweg des Roboters zu erhalten:

Erfassen (S102) eines Iterationswegs, der einem aktuellen Iterationsprozess entspricht, Bestimmen eines Glättungskostenwerts, der dem Iterationsweg entspricht, und eines optimalen Glättungsgradienten, der einem Iterationswegpunkt im Iterationsweg entspricht;

Bestimmen (S103) einer Roboter-Fußabdruckkontur, die dem Iterationswegpunkt entspricht, und Suchen eines ersten nächstgelegenen Hindernisabstands, der der Fußabdruckkontur entspricht;

Bestimmen (S104) eines Hinderniskostenwerts, der dem Iterationsweg entspricht, und eines optimalen Hindernisgradienten, der dem Iterationswegpunkt entspricht, basierend auf dem ersten nächstgelegenen Hindernisabstand;

Anpassen (S105) des Iterationswegpunkts basierend auf dem optimalen Glättungsgradienten und dem optimalen Hindernisgradienten, um einen Iterationsweg zu erhalten, der einem nächsten Iterationsprozess entspricht; und

Eingeben (S106) der Glättungskosten und der Hinderniskosten in eine voreingestellte Zielfunktion, **dadurch gekennzeichnet, dass** der Schritt des Bestimmens (S104) der Hinderniskosten, die dem Iterationsweg entsprechen, und des optimalen Hindernisgradienten, der dem Iterationswegpunkt entspricht, auf der Grundlage des ersten nächstgelegenen Hindernisabstands die folgenden Schritte umfasst:

Auswählen (S206) eines Fußabdruckkonturpunkts mit einem kleinsten ersten nächsten Hindernis aus den Fußabdruckkonturpunkten der Fußabdruckkontur des Roboters als Zielfußabdruckkonturpunkt, der dem Iterationswegpunkt entspricht;

Bestimmen (S207) der Hinderniskosten, die dem Iterationsweg entsprechen, unter Verwendung des ersten nächstgelegenen Hindernisabstands, der dem Zielfußabdruckkonturpunkt entspricht;

Bestimmen (S208) eines Hindernisabstandsgradienten, der dem Zielfußabdruckkonturpunkt entspricht; und

Bestimmen (S209) des optimalen Hindernisgradienten, der dem Iterationswegpunkt entspricht, unter Verwendung des ersten nächstgelegenen Hindernisabstands und des Hindernisabstandsgradienten, der dem Zielfußabdruckkonturpunkt entspricht.

2. Verfahren nach Anspruch 1, wobei der Schritt des Bestimmens der dem Iterationswegpunkt entsprechenden Fußabdruckkontur des Roboters umfasst:

Erfassen (S203) eines den benachbarten Iterationswegpunkten des Iterationswegpunkts entsprechenden Richtungswinkels und Bestimmen einer dem Richtungswinkel entsprechenden Fußabdruckkontur des Roboters;
Auswählen (S204) von Fußabdruckkonturpunkten des Roboters, die dem Iterationswegpunkt entsprechen, aus der Fußabdruckkontur auf der Grundlage einer voreingestellten Regel zum Auswählen von Konturpunkten.

3. Verfahren nach Anspruch 2, wobei das Suchen nach dem ersten nächstgelegenen Hindernisabstand, der der Fußabdruckkontur entspricht, umfasst:
Suchen (S205) nach ersten nächstgelegenen Hindernisabständen, die den Fußabdruckkonturpunkten in einer voreingestellten Abstandskarte entsprechen.

4. Verfahren nach Anspruch 1, wobei das Bestimmen der Hinderniskosten entsprechend dem Iterationsweg unter Verwendung des ersten nächstgelegenen Hindernisabstands entsprechend dem Zielfußabdruckkonturpunkt umfasst:

Eingeben des ersten nächstgelegenen Hindernisabstands, der dem Zielfußabdruckkonturpunkt entspricht, in einen voreingestellten Hinderniskostenalgorithmus; und
Erfassen eines Hinderniskostenwerts, der dem vom Hinderniskostenalgorithmus ausgegebenen Iterationswegpunkt entspricht, und Zusammenfassen der Hinderniskosten, die dem Iterationswegpunkt entsprechen, um die Hinderniskosten zu erhalten, die dem Iterationsweg entsprechen.

5. Verfahren nach Anspruch 4, wobei der Hinderniskostenalgorithmus umfasst:

$$f_o = \begin{cases} (d_{min} - d_\delta)^2, d_{min} < d_\delta; \\ 0, d_{min} > d_\delta \end{cases}$$

wobei $f_o$ die Hinderniskosten entsprechend dem Iterationswegpunkt sind, $d_{min}$ der erste nächstgelegene Hindernisabstand entsprechend dem Zielfußabdruckkonturpunkt ist und $d_\delta$ ein voreingestellter Abstand ist.

6. Verfahren nach einem der Ansprüche 1 bis 5, wobei das Bestimmen des Hindernisabstandsgradienten entsprechend dem Zielfußabdruckkonturpunkt umfasst

Bestimmen eines Nachbarpunkts, der dem Zielfußabdruckkonturpunkt entspricht, und Suchen eines zweiten nächstgelegenen Hindernisabstands entsprechend dem Nachbarpunkt;
Auswählen eines ersten Nachbarpunkts mit einem größten zweiten nächstgelegenen Hindernisabstand und eines zweiten Nachbarpunkts mit einem kleinsten zweiten nächstgelegenen Hindernisabstand aus den Nachbarpunkten;
Bestimmen eines Abstands zwischen dem ersten Nachbarpunkt und dem zweiten Nachbarpunkt und Bestimmen des Abstands als den Hindernisabstandsgradienten, der dem Zielfußabdruckkonturpunkt entspricht.

7. Verfahren nach einem der Ansprüche 1 bis 6, wobei das Bestimmen des optimalen Hindernisgradienten entsprechend dem Iterationswegpunkt unter Verwendung des ersten nächstgelegenen Hindernisabstands und des Hindernisabstandsgradienten entsprechend dem Zielfußabdruckkonturpunkt umfasst:

Eingeben des Hindernisabstandsgradienten und des ersten nächstgelegenen Hindernisabstands entsprechend dem Zielfußabdruckkonturpunkt in einen voreingestellten Algorithmus für den optimalen Hindernisgradienten; und
Erfassen eines optimalen Hindernisgradienten, der dem vom Algorithmus für den optimalen Hindernisgradienten ausgegebenen Iterationswegpunkt entspricht.

8. Verfahren nach Anspruch 7, wobei der Hinderniskostenalgorithmus umfasst:

$$\frac{\partial f_o}{\partial x} = \begin{cases} 2 * (d_{min} - d_\delta) * grad_{min}, d_{min} < d_\delta; \\ 0, d_{min} > d_\delta \end{cases}$$

wobei $\frac{\partial f_o}{\partial x}$ der optimalen Hindernisgradienten ist, $d_{min}$ der erste nächstgelegene Hindernisabstand entsprechend dem Zielfußabdruckkonturpunkt ist, $d_\delta$ ein voreingestellter Abstand ist und $grad_{min}$ der Hindernisabstandsgradient ist.

9. Verfahren nach einem der Ansprüche 1 bis 8, wobei das Anpassen der Iterationswegpunkte auf der Grundlage des optimalen Glättungsgradienten und des optimalen Hindernisgradienten zum Erhalten des Iterationswegs, der dem nächsten Iterationsprozess entspricht, umfasst:

Zusammenfassen (S210) des optimalen Glättungsgradienten und des optimalen Hindernisgradienten, um einen integrierten Gradienten zu erhalten; und
Anpassen (S211) des Iterationswegpunkts unter Verwendung des integrierten Gradienten, um einen Iterationsweg zu erhalten, der einem nächsten Iterationsprozess entspricht.

10. Verfahren nach einem der Ansprüche 1 bis 9, wobei das iterative Optimieren des Anfangswegs, bis die voreingestellte Iterationsbeendigungsbedingung erfüllt ist, umfasst:
das iterative Optimieren des Anfangswegs, bis eine Zielfunktion eine Konvergenzbedingung erfüllt, bis die Anzahl der Iterationen eine voreingestellte Anzahl von Iterationen erreicht oder bis die Iterationsdauer eine voreingestellte Dauer erreicht.

11. Verfahren nach einem der Ansprüche 1 bis 10, wobei die Zielfunktion umfasst:

$$\min_x \lambda_1 f_{ns} + \lambda_2 f_{no}$$

wobei $f_{ns}$ die Glättungskosten, $f_{no}$ die Hinderniskosten und $x$ die Koordinaten des Iterationswegpunkts sind.

12. Wegoptimierungsvorrichtung (8), umfassend:

ein Wegakquisitionsmodul (810), das zum Erfassen eines Anfangswegs eines Roboters konfiguriert ist;
ein Wegoptimierungsmodul (820), das zum iterativen Optimieren des Anfangswegs auf der Grundlage der folgenden Schritte konfiguriert ist, bis eine voreingestellte Iterationsbeendigungsbedingung erfüllt ist, um einen Hindernisvermeidungsweg des Roboters zu erhalten:

Erfassen eines Iterationswegs, der einem aktuellen Iterationsprozess entspricht, Bestimmen einer Glättungskostenfunktion, die dem Iterationsweg entspricht, und eines optimalen Glättungsgradienten, der einem Iterationswegpunkt im Iterationsweg entspricht;
Bestimmen einer Fußabdruckkontur des Roboters, die dem Iterationswegpunkt entspricht, und Suchen eines ersten nächstgelegenen Hindernisabstands, der der Fußabdruckkontur entspricht;
Bestimmen eines Hinderniskostenwerts, der dem Iterationsweg entspricht, und eines optimalen Hindernisgradienten, der dem Iterationswegpunkt entspricht, basierend auf dem ersten nächstgelegenen Hindernisabstand, wobei das Bestimmen des Hinderniskostenwerts die folgenden Aspekte a) bis d) umfasst:

a) Auswählen (S206) eines Fußabdruckkonturpunkts mit einem kleinsten ersten nächsten Hindernis aus den Fußabdruckkonturpunkten der Fußabdruckkontur des Roboters als Zielfußabdruckkonturpunkt, der dem Iterationswegpunkt entspricht;
b) Bestimmen (S207) eines Hinderniskostenwerts, der dem Iterationsweg entspricht, unter Verwendung des ersten nächstgelegenen Hindernisabstands, der dem Zielfußabdruckkonturpunkt entspricht;
c) Bestimmen (S208) eines Hindernisabstandsgradienten, der dem Zielfußabdruckkonturpunkt entspricht; und
d) Bestimmen (S209) eines für den Iterationswegpunkt optimalen Hindernisgradienten unter Verwendung des ersten nächstgelegenen Hindernisabstands und des zu dem Zielfußabdruckkonturpunkt korrespondierenden Hindernisabstandsgradienten;

Anpassen des Iterationswegpunkts auf der Grundlage des optimalen Glättungsgradienten und des optimalen Hindernisgradienten, um einen Iterationsweg zu erhalten, der einem nächsten Iterationsprozess entspricht; und
Eingeben der Glättungskosten und der Hinderniskosten in eine voreingestellte Zielfunktion.

13. Ein Roboter (9), umfassend einen Prozessor (91), eine Kommunikationsschnittstelle (92), einen Speicher (93) und einen Kommunikationsbus (94), wobei der Prozessor (91), die Kommunikationsschnittstelle (92) und der Speicher (93) über den Kommunikationsbus (94) miteinander kommunizieren;

wobei der Speicher (93) zum Speichern von Computerprogrammen konfiguriert ist; und
wobei der Prozessor (91) zum Implementieren des Verfahrens nach einem der Ansprüche 1 bis 11 konfiguriert ist.

14. Computerlesbares Speichermedium, auf dem ein Programm gespeichert ist, wobei das Programm, wenn es von einem Prozessor ausgeführt wird, das Verfahren nach einem der Ansprüche 1 bis 11 implementiert.

**Revendications**

1. Procédé d'optimisation de trajectoire, comprenant :
l'acquisition (S101) d'une trajectoire initiale d'un robot, et l'optimisation itérative de la trajectoire initiale sur la base des étapes suivantes jusqu'à ce qu'une condition de fin d'itération prédéfinie soit remplie pour obtenir une trajectoire d'évitement d'obstacle du robot :

l'acquisition (S102) d'une trajectoire d'itération correspondant à un processus d'itération en cours, la détermination d'un coût de fluidité correspondant à la trajectoire d'itération et un gradient optimal de fluidité correspondant à un point de la trajectoire d'itération dans la trajectoire d'itération ;
la détermination (S103) du contour de l'empreinte du robot correspondant au point de la trajectoire d'itération, et la recherche d'une première distance de l'obstacle le plus proche correspondant au contour de l'empreinte ;
la détermination (S104) d'un coût d'obstacle correspondant à la trajectoire d'itération et un gradient optimal d'obstacle correspondant au point de la trajectoire d'itération sur la base de la première distance de l'obstacle le plus proche ;
l'ajustement (S105) du point de la trajectoire d'itération sur la base du gradient optimal de fluidité et du gradient optimal d'obstacle pour acquérir une trajectoire d'itération correspondant à un processus d'itération suivant ; et
l'entrée (S106) du coût de fluidité et du coût de l'obstacle dans une fonction objective prédéfinie, **caractérisée en ce que** l'étape de détermination (S104) du coût de l'obstacle correspondant à la trajectoire d'itération et du gradient optimal de l'obstacle correspondant au point de la trajectoire d'itération sur la base de la première distance de l'obstacle le plus proche comprend les étapes suivantes :

la sélection (S206), parmi les points du contour de l'empreinte du robot, d'un point du contour de l'empreinte présentant le premier obstacle le plus proche le plus petit en tant que point cible du contour de l'empreinte correspondant au point de la trajectoire d'itération ;
la détermination (S207) du coût de l'obstacle correspondant à la trajectoire d'itération en utilisant la première distance de l'obstacle le plus proche correspondant au point cible du contour de l'empreinte ;
la détermination (S208) d'un gradient d'éloignement de l'obstacle correspondant au point de contour de l'empreinte cible ; et
la détermination (S209) du gradient optimal de l'obstacle correspondant au point de la trajectoire d'itération en utilisant la première distance d'obstacle le plus proche et le gradient d'éloignement de l'obstacle correspondant au point cible du contour de l'empreinte.

2. Procédé selon la revendication 1, dans lequel l'étape de détermination du contour de l'empreinte du robot correspondant au point de la trajectoire d'itération comprend :

l'acquisition (S203) d'un angle de cap correspondant aux points de la trajectoire d'itération voisins du point de la trajectoire d'itération et la détermination d'un contour d'empreinte du robot correspondant à l'angle de cap ;
la sélection (S204) des points du contour de l'empreinte du robot correspondant au point de la trajectoire d'itération à partir du contour de l'empreinte, sur la base d'une règle prédéfinie pour la sélection des points du contour.

3. Procédé selon la revendication 2, dans lequel la recherche de la première distance d'obstacle le plus proche correspondant au contour de l'empreinte comprend :
la recherche (S205) des premières distances d'obstacle les plus proches correspondant aux points de contour de l'empreinte dans une carte de distance prédéfinie.

**4.** Procédé selon la revendication 1, dans lequel la détermination du coût de l'obstacle correspondant à la trajectoire d'itération en utilisant la première distance de l'obstacle le plus proche correspondant au point de contour de l'empreinte cible comprend :

la saisie de la première distance de l'obstacle le plus proche correspondant au point de contour de l'empreinte cible dans un algorithme de coût de l'obstacle prédéfini ; et
la acquisition d'un coût d'obstacle correspondant au point de la trajectoire d'itération produit par l'algorithme de coût d'obstacle, et le résumé du coût d'obstacle correspondant au point de la trajectoire d'itération pour obtenir le coût d'obstacle correspondant à la trajectoire d'itération.

**5.** Procédé selon la revendication 4, dans lequel l'algorithme de coût d'obstacle comprend :

$$f_o = \begin{cases} (d_{min} - d_\delta)^2, d_{min} < d_\delta; \\ 0, d_{min} > d_\delta \end{cases}$$

dans lequel, le $f_o$ est un coût d'obstacle correspondant au point de la trajectoire d'itération, le $d_{min}$ est la première distance d'obstacle le plus proche correspondant au point du contour de l'empreinte cible, le $d_\delta$ est une distance prédéfinie.

**6.** Procédé selon l'une quelconque des revendications 1 à 5, dans lequel la détermination du gradient d'éloignement de l'obstacle correspondant au point de contour de l'empreinte cible comprend

la détermination d'un point voisin correspondant au point de contour de l'empreinte cible, et la recherche d'une seconde distance d'obstacle le plus proche correspondant au point voisin ;
la sélection, parmi les points voisins, d'un premier point voisin ayant la seconde distance d'obstacle le plus proche la plus grande et d'un second point voisin ayant la seconde distance d'obstacle le plus proche la plus petite ;
la détermination d'une distance entre le premier point voisin et le second point voisin, et la détermination de la distance en tant que gradient d'éloignement de l'obstacle correspondant au point de contour de l'empreinte cible.

**7.** Procédé selon l'une quelconque des revendications 1 à 6, dans lequel la détermination du gradient optimal de l'obstacle correspondant au point de la trajectoire d'itération en utilisant la première distance de l'obstacle le plus proche et le gradient de l'éloignement de l'obstacle correspondant au point du contour de l'empreinte cible comprend :

la saisie du gradient d'éloignement de l'obstacle et de la première distance de l'obstacle le plus proche correspondant au point de contour de l'empreinte cible dans un algorithme prédéfini de gradient optimal d'éloignement de l'obstacle ; et
l'acquisition d'un gradient optimal d'obstacle correspondant au point de la trajectoire d'itération produit par l'algorithme de gradient optimal d'obstacle.

**8.** Procédé selon la revendication 7, dans lequel l'algorithme de coût d'obstacle comprend :

$$\frac{\partial f_o}{\partial x} = \begin{cases} 2 * (d_{min} - d_\delta) * grad_{min}, d_{min} < d_\delta; \\ 0, d_{min} > d_\delta \end{cases}$$

dans lequel le $\frac{\partial f_o}{\partial x}$ est le gradient optimal d'obstacle, le $d_{min}$ est la première distance d'obstacle le plus proche correspondant au point de contour de l'empreinte cible, le $d_\delta$ est une distance prédéfinie, le $grad_{min}$ est le gradient d'éloignement de l'obstacle.

**9.** Procédé selon l'une quelconque des revendications 1 à 8, dans lequel l'ajustement des points de la trajectoire d'itération basé sur le gradient optimal de fluidité et le gradient optimal d'obstacle pour acquérir la trajectoire d'itération correspondant au processus d'itération suivant comprend :

le résumé (S210) du gradient optimal de fluidité et le gradient optimal d'obstacle pour obtenir un gradient intégré ; et
l'ajustement (S211) du point de la trajectoire d'itération en utilisant le gradient intégré pour obtenir une trajectoire d'itération correspondant au processus d'itération suivant.

**10.** Procédé selon l'une quelconque des revendications 1 à 9, dans lequel l'optimisation itérative de la trajectoire initiale jusqu'à ce que la condition de fin d'itération prédéfinie soit remplie comprend :

l'optimisation itérative de la trajectoire initiale jusqu'à ce qu'une fonction objective satisfasse à une condition de convergence, jusqu'à ce que le nombre d'itérations atteigne un nombre prédéfini d'itérations ou jusqu'à ce que la durée d'itération atteigne une durée prédéfinie.

**11.** Procédé selon l'une quelconque des revendications 1 à 10, dans lequel la fonction objective comprend :

$$\min_{x} \lambda_1 f_{ns} + \lambda_2 f_{no}$$

dans lequel, le $f_{ns}$ est le coût de fluidité, le $f_{no}$ est le coût de l'obstacle, le X est les coordonnées du point de la trajectoire d'itération.

**12.** Appareil (8) pour l'optimisation de trajectoire, comprenant :

un module d'acquisition de trajectoire (810), configuré pour acquérir une trajectoire initiale d'un robot ;
un module d'optimisation de trajectoire (820), configuré pour optimiser de manière itérative la trajectoire initiale sur la base des étapes suivantes jusqu'à ce qu'une condition de fin d'itération prédéfinie soit remplie afin d'obtenir une trajectoire d'évitement des obstacles du robot :

l'acquisition d'une trajectoire d'itération correspondant à un processus d'itération en cours, la détermination d'un coût de fluidité correspondant à la trajectoire d'itération et un gradient optimal de fluidité correspondant à un point de la trajectoire d'itération dans la trajectoire d'itération ;
la détermination d'un contour de l'empreinte du robot correspondant au point de la trajectoire d'itération, et la recherche d'une première distance de l'obstacle le plus proche correspondant au contour de l'empreinte ;
la détermination d'un coût d'obstacle correspondant à la trajectoire d'itération et d'un gradient optimal d'obstacle correspondant au point de la trajectoire d'itération sur la base de la première distance de l'obstacle le plus proche, ladite détermination du coût d'obstacle comprenant les aspects a) à d) suivants :

a) la sélection (S206), parmi les points du contour de l'empreinte du robot, d'un point du contour de l'empreinte présentant le premier obstacle le plus proche le plus petit en tant que point cible du contour de l'empreinte correspondant au point de la trajectoire d'itération ;
b) la détermination (S207) d'un coût d'obstacle correspondant à la trajectoire d'itération en utilisant la première distance d'obstacle le plus proche correspondant au point cible du contour de l'empreinte ;
c) la détermination (S208) d'un gradient d'éloignement de l'obstacle correspondant au point de contour de l'empreinte cible ; et
d) la détermination (S209) d'un gradient optimal d'obstacle correspondant au point de la trajectoire d'itération en utilisant la première distance d'obstacle le plus proche et le gradient d'éloignement de l'obstacle correspondant au point cible du contour de l'empreinte ;

l'ajustement du point de la trajectoire d'itération sur la base du gradient optimal de fluidité et du gradient optimal d'obstacle pour acquérir une trajectoire d'itération correspondant à un processus d'itération suivant ; et
l'introduction du coût de la fluidité et le coût de l'obstacle dans une fonction objective prédéfinie.

**13.** Robot (9) comprenant un processeur (91), une interface de communication (92), une mémoire (93) et un bus de communication (94), dans lequel le processeur (91), l'interface de communication (92) et la mémoire (93) communiquent entre eux par l'intermédiaire du bus de communication (94) ;

la mémoire (93) est configurée pour stocker des programmes informatiques ; et
le processeur (91) est configuré pour mettre en œuvre le procédé selon l'une quelconque des revendications 1 à 11.

**14.** Support de stockage lisible par ordinateur sur lequel un programme d'ordinateur est stocké, dans lequel le programme, lorsqu'il est exécuté par un processeur, met en œuvre le procédé selon l'une quelconque des revendications 1 à 11.

acquiring an initial path of a robot, and iteratively optimizing the initial path based on the following steps until a preset iteration termination condition is met to acquire an obstacle avoidance path of the robot ⟋ S101

acquiring an iteration path corresponding to the current iteration process, determining a smoothness cost corresponding to the iteration path and a smoothness optimization gradientoptimal gradient corresponding to iteration path points in the iteration path ⟋ S102

determining a robot footprint contour corresponding to the iteration path point, and searching for a first nearest obstacle distance corresponding to the footprint contour ⟋ S103

determining an obstacle cost corresponding to the iteration path and an obstacle optimization gradientoptimal gradient corresponding to the iteration path point based on the first nearest obstacle distance ⟋ S104

adjusting the iteration path points based on the smoothness optimization gradientoptimal gradient and the obstacle optimization gradientoptimal gradient to acquire a iteration path corresponding to a next iteration process ⟋ S105

and inputting the smoothness cost and the obstacle cost to a preset objective function ⟋ S106

Fig. 1

| acquiring an initial path of a robot, and iteratively optimizing the initial path based on the following steps until a preset iteration termination condition is met to obtain obstacle avoidance path of the robot | S201 |

| acquiring an iteration path corresponding to a current iteration process, determining a smoothness cost corresponding to the iteration path and a smoothness optimal gradient corresponding to an iteration path point in the iteration path | S202 |

| acquiring a heading angle corresponding to the iteration path point and determining a footprint contour of the robot corresponding to the heading angle | S203 |

| selecting footprint contour points of the robot corresponding to the iteration path point from the footprint contour based on a preset rule for selecting contour points | S204 |

| searching for first nearest obstacle distances corresponding to the footprint contour points in a preset distance map | S205 |

| selecting, from the footprint contour points, a footprint contour point with a smallest first nearest obstacle as a target footprint contour point corresponding to the iteration path point | S206 |

| determining an obstacle cost corresponding to the iteration path by using the first nearest obstacle distance corresponding to the target contour point | S207 |

| determining an away-from-obstacle gradient corresponding to the target footprint contour point | S208 |

| determining an obstacle optimization gradientoptimal gradient corresponding to the iteration path point by using the first nearest obstacle distance corresponding to the target contour point and the away-from-obstacle gradientthe first nearest obstacle distance and the away-from-obstacle gradient corresponding to the target contour point | S209 |

| summarizing the smoothness optimization gradientoptimal gradient and the obstacle optimization gradientoptimal gradient to obtain a integratedan integrated gradient | S210 |

| adjusting the iteration path point by using the integrated gradient to obtain an iteration path corresponding to a next iteration process | S211 |

| and, inputting the smoothness cost and the obstacle cost to a preset objective function | S212 |

Fig. 2

footprint contour point ■

iteration path point ●

obstacle ○

Fig. 3

footprint contour point ■

iteration path point ●

obstacle ○

Fig. 4

$d_{min}$

$x_{min}$, $y_{min}$

......

footprint contour point ■

iteration path point ●

obstacle ○

Fig. 5

target footprint contour point ■

neighbor point ●

obstacle ○

Fig. 6

first neighbor point

second neighbor point

target footprint contour point ■

neighbor point ●

obstacle ○

Fig. 7

apparatus for path optimization

8

path acquisition module 810

path optimization module 820

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190080266 A1

- US 20190086925 A1